# EUROPÄISCHE PATENTANMELDUNG

(11) **EP 4 844 245 A1**
(43) Veröffentlichungstag der Anmeldung: **25.11.2026**
(21) Anmeldenummer: 26178889.7
(22) Anmeldetag: 15.05.2026
(51) Int. Cl.: F16H 61/431, F16H 61/421, F16H 59/68

(54) **VERFAHREN ZUM BETREIBEN EINES HYDROSTATISCHEN FAHRANTRIEBSTRANGS EINER MOBILEN ARBEITSMASCHINE**

(30) Priorität: 19.05.2025 DE 102025119205
(71) Anmelder: Robert Bosch GmbH, 70442 Stuttgart (DE)
(72) Erfinder: Mueller, Matthias, 89129 Langenau (DE); Herrmann, Ronny, 89129 Langenau (DE); Pfetsch, Steffen, 89134 Blaustein (DE)

(57) **Zusammenfassung**

Die Erfindung betrifft ein Verfahren zum Betreiben eines hydrostatischen Fahrantriebstrangs einer mobilen Arbeitsmaschine, wobei der Fahrantriebstrang eine verstellbare Hydropumpe (1) und einen mit dieser hydraulisch verbundenen, verstellbaren Hydromotor (3) aufweist, wobei die Hydropumpe (1) durch einen Antriebsmotor (30), insbesondere einen Verbrennungsmotor, angetrieben wird, wobei ein durch ein erstes Bedienelement (26) erzeugtes Fahrbediensignal (40) erfasst wird (110), wobei unter Verwendung einer Pumpen-Steuerungs-Kennlinie (42) aus dem Fahrbediensignal (40) ein Ansteuergrad (44) zumindest eines Druckregelventils (181, 182) einer Verstelleinheit (4a) der Hydropumpe (1) bestimmt wird (120), wobei unter Verwendung einer Solldruck-Kennlinie (50) aus dem Fahrbediensignal (40) ein Solldruck (52) bestimmt wird (130), wobei durch eine Druckregelung (54) aus dem Solldruck (52) und einem Istdruck (53) des Hydromotors (3) ein Verstellwert (56) für eine Verstellgröße des Hydromotors bestimmt wird (140), wobei das zumindest eine Druckregelventil (181, 182) der Verstelleinheit (4a) der Hydropumpe (1) entsprechend dem Ansteuergrad (44) angesteuert wird (150) und wobei eine Verstelleinheit (4b) des Hydromotors (3) entsprechend dem Verstellwert (56) angesteuert wird (160).

## Beschreibung

Die vorliegende Erfindung betrifft ein Verfahren zum Betreiben eines hydrostatischen Fahrantriebstrangs einer mobilen Arbeitsmaschine sowie eine Recheneinheit und ein Computerprogramm zur Durchführung des Verfahrens.

### Hintergrund der Erfindung

Es sind hydrostatische Fahrantriebe für mobile Arbeitsmaschinen bekannt, bei denen eine Hydropumpe und ein oder mehrere Hydromotoren in einem geschlossenen oder offenen hydraulischen Kreis miteinander verbunden sind. Die Hydropumpe wird beispielsweise von einem Verbrennungsmotor - insbesondere einem Dieselmotor - angetrieben, und der Hydromotor bzw. die Hydromotoren treiben schließlich die mobile Arbeitsmaschine an - z.B. über ein jeweiliges Rad. Die Hydropumpe und der Hydromotor bzw. die Hydromotoren derartiger Fahrantriebe können in ihrem Fördervolumen verstellbar sein.

### Offenbarung der Erfindung

Erfindungsgemäß werden ein Verfahren zum Betreiben eines hydrostatischen Fahrantriebstrangs einer mobilen Arbeitsmaschine sowie eine Recheneinheit und ein Computerprogramm zur Durchführung des Verfahrens mit den Merkmalen der unabhängigen Patentansprüche vorgeschlagen. Vorteilhafte Ausgestaltungen sind Gegenstand der Unteransprüche sowie der nachfolgenden Beschreibung.

Bei der Erfindung wird beim Betreiben eines hydrostatischen Fahrantriebstrangs, der eine durch einen Antriebsmotor angetriebene verstellbare Hydropumpe und einen mit dieser hydraulisch verbundenen, verstellbaren Hydromotor aufweist, unter Verwendung einer Pumpen-Steuerungs-Kennlinie aus einem Fahrbediensignal einen Ansteuergrad für zumindest ein Druckregelventil einer Verstelleinheit der Hydropumpe bestimmt, unter Verwendung einer Solldruck-Kennlinie aus dem Fahrbediensignal ein Solldruck bestimmt und durch eine Druckregelung aus dem Solldruck und einem Istdruck des Hydromotors ein Verstellwert für eine Verstellgröße des Hydromotors bestimmt. Die Hydropumpe und der Hydromotor werden entsprechend dem Ansteuergrad bzw. entsprechend dem Verstellwert angesteuert.

Die vorgeschlagene Maßnahme ermöglicht, bei gegebener, im Wesentlichen konstanter oder nur langsam veränderlicher Drehzahl des Antriebsmotors eine "Lastfühligkeit" zu erreichen, d.h. ein Bediener der mobilen Arbeitsmaschine erhält anhand einer Änderung der Fahrgeschwindigkeit eine Rückmeldung über eine Änderung der Belastung des Fahrantriebs (z.B. beim Übergang der Fahrt aus einer Ebene in einen Hang oder bei Aufnahme einer Masse an Schüttgut o.Ä.) und kann die Betätigung anpassen, um die Änderung zu kompensieren. Bei Anwendungen wie Radladern, Telehandlern und Mobilbaggern lassen sich damit Arbeitsaufgaben präziser und effizienter erledigen.

Der Solldruck und der Istdruck sind insbesondere ein Sollwert und ein Istwert für eine Druckdifferenz über dem Hydromotor oder für den Druck an einem Arbeitsanschluss des Hydromotors. Es können ein oder mehrere Drucksensoren vorgesehen sein, um den Istdruck zu bestimmen.

Gemäß einer Ausgestaltung wird aus einem Fördervolumen bzw. einem Schwenkwinkel der Hydropumpe und einer Drehzahl des Antriebsmotors und/oder der Hydropumpe ein Maximum für den Ansteuergrad bestimmt, wobei der Ansteuergrad des zumindest einen Druckregelventils bestimmt wird, so dass das Maximum nicht überschritten wird. Durch die vom Fördervolumen und der Drehzahl abhängige Bestimmung des Maximums für den Ansteuergrad kann bei geeigneter Parametrierung insbesondere eine Anpassung an einerseits kleine Volumenströme (z.B. zur Feinsteuerung bei hoher Last) und andererseits große Volumenströme (z.B. bei hoher Fahrzeuggeschwindigkeit) implementiert werden. Das Fördervolumen bzw. der Schwenkwinkel kann mit einem geeigneten Sensor, z.B. Schwenkwinkelsensor, bestimmt werden.

Gemäß einer Ausgestaltung erfolgt eine Dynamiklimitierung des Ansteuergrads, durch welche (d.h. die Dynamiklimitierung) eine Änderungsrate des Ansteuergrads betragsmäßig begrenzt und/oder limitiert wird, wobei der durch die Dynamiklimitierung begrenzte bzw. limitierte Ansteuergrad in der Ansteuerung des zumindest einen Druckregelventils verwendet wird. Durch die Dynamiklimitierung kann ein ruckartiges Beschleunigen oder Abbremsen vermieden werden. Die Dynamiklimitierung stellt im Prinzip eine Abbildung dar, die den mittels der Pumpen-Steuerungs-Kennlinie bestimmten Ansteuergrad, der als Funktion der Zeit aufgefasst wird (d.h. als Ansteuergradsignal, angesehen wird, das einen zeitlichen Verlauf aufweist) und dessen Änderungsrate zunächst unlimitiert sein kann, auf einen Ansteuergrad (limitierter Ansteuergrad) mit limitierter Änderungsrate abbildet. Der Ansteuergrad vor Anwendung der Dynamiklimitierung (wie mittels der Pumpen-Steuerungs-Kennlinie bestimmt) kann entsprechend auch als dynamik-unlimitierter Ansteuergrad bezeichnet werden. Der Ansteuergrad nach Anwendung der Dynamiklimitierung kann entsprechend auch als dynamik-limitierter Ansteuergrad bezeichnet werden. Beispielsweise kann die Dynamiklimitierung ein Tiefpassfilter einschließen. Ebenso beispielsweise kann alternativ oder zusätzlich die Dynamiklimitierung des Ansteuergrads so erfolgen, dass die Änderungsrate gleich oder größer als ein vorbestimmter unterer (negativer) Änderungsratengrenzwert und/oder gleich oder kleiner als ein vorbestimmter oberer (positiver) Änderungsratengrenzwert ist. Im letzteren Fall werden also explizite Änderungsratengrenzwerte vorgegeben, zwischen denen die Änderungsrate des Ansteuergrads liegen soll.

Gemäß einer Ausgestaltung ist die Verstellgröße des Hydromotors eine Verdrängung bzw. ein Schwenkwinkel des Hydromotors. D.h., aus der Verstellgröße ergibt sich bei gegebenem Solldruck ein entsprechendes Drehmoment des Hydromotors.

Gemäß einer Ausgestaltung wird unter Verwendung einer Minimum-Kennlinie aus dem Fahrbediensignal ein Minimalwert für die Verstellgröße des Hydromotors bestimmt, wobei in der Druckregelung der Verstellwert so bestimmt wird, dass der Minimalwert nicht unterschritten wird, und/oder wobei, wenn der durch die Druckregelung bestimmte Verstellwert kleiner als der Minimalwert ist, die Verstelleinrichtung des Hydromotors mit dem Minimalwert angesteuert wird. Diese Ausgestaltung (wie auch die weiter unten beschriebene Verwendung einer Maximum-Kennlinie) ermöglicht es, Bedingungen an die Verstellgröße zu berücksichtigen, die ansonsten wegen der Verstellung über die Druckregelung nicht berücksichtigt würden. Insbesondere kann durch die Minimum-Kennlinie ein minimales Drehmoment am Hydromotor gewährleistet werden.

Gemäß einer Ausgestaltung nimmt in der Minimum-Kennlinie der Minimalwert ausgehend von einem Anfangswert bei einer Höhe des Fahrbediensignals von kleiner als 10 %, insbesondere von gleich null, einer maximalen Höhe des Fahrbediensignals, mit zunehmender Höhe des Fahrbediensignals ab, wobei der Anfangswert im Bereich zwischen 50 % und 100 % einem maximal möglichen Wert der Verstellgröße liegt. Entsprechend dieser Ausgestaltung erfolgt die Steuerung der Fahrgeschwindigkeit beim Anfahren und bei geringen Geschwindigkeiten zunächst über den Schwenkwinkel der Hydropumpe (mittels der Ansteuergröße) und bei höheren Geschwindigkeiten durch Änderung der Verstellgröße.

Gemäß einer Ausgestaltung wird unter Verwendung einer Maximum-Kennlinie aus dem Fahrbediensignal ein Maximalwert für die Verstellgröße des Hydromotors bestimmt, wobei in der Druckregelung der Verstellwert so bestimmt wird, dass der Maximalwert nicht überschritten wird, und/oder wobei, wenn der durch die Druckregelung bestimmte Verstellwert größer als der Maximalwert ist, die Verstelleinrichtung des Hydromotors mit dem Maximalwert angesteuert wird. Das am Hydromotor auftretende Drehmoment kann auf diese Weise beschränkt werden. Klarerweise sollte, wenn ein Minimalwert vorgesehen ist, der Maximalwert für jede Höhe des Fahrbediensignals über dem Minimalwert liegen.

Wenn die Druckregelung einen Integralanteil einschließt und entsprechend einer oder beider der vorstehenden Ausgestaltungen eine Begrenzung durch einen Minimalwert und/oder Maximalwert, der bzw. die mittels einer Minimum-Kennlinie und/oder Maximum-Kennlinie bestimmt wird bzw. werden, kann vorgesehen sein, dass eine Abweichung zwischen dem durch die Druckregelung zunächst ohne Begrenzung bestimmten Ansteuerwert und dem tatsächlich nach der Begrenzung verwendetem Ansteuerwert berechnet und in einer Anti-Windup-Funktion der Druckregelung verwendet wird.

Gemäß einer Ausgestaltung nimmt in der Maximum-Kennlinie der Maximalwert ausgehend von einem Wert im Bereich von 95 % bis 100 % eines maximal möglichen Werts der Verstellgröße mit zunehmender Höhe des Fahrbediensignals ab. Insbesondere liegt der Maximalwert bei einer maximalen Höhe des Fahrbediensignals im Bereich von 40 % bis 80 % des maximal möglichen Werts der Verstellgröße. Durch diese Ausgestaltung kann das Drehmoment am Hydromotor begrenzt werden. Insbesondere kann das bei Bremsvorgängen von dem Hydromotor aufzunehmende Drehmoment, das z.B. bei Bergabfahrt mit großer Last sehr groß werden kann, begrenzt werden. Eventuelle daraus resultierende Überlastungen können vermieden werden.

Gemäß einer Ausgestaltung wird ein durch ein zweites Bedienelement erzeugtes Antriebsmotorbediensignal erfasst, wobei eine Drehzahlregelung des Antriebsmotors und/oder der Hydropumpe entsprechend dem Antriebsmotorbediensignal erfolgt, wobei eine Solldrehzahl der Drehzahlregelung aus einem Wert bzw. einer Höhe des Antriebsmotorbediensignals bestimmt wird. Die Drehzahl des Antriebsmotors und damit die maximal verfügbare Leistung kann also unabhängig vom Fahrbediensignal (d.h. der Betätigung des ersten Bedienelements) eingestellt werden und z.B. im Wesentlichen (abgesehen von Regelungsabweichung) konstant bleiben bis eine Stellung des zweiten Bedienelements durch den Bediener verändert wird. Das zweite Bedienelement ist insbesondere ein Bedienelement, das seine Stellung bzw. das Antriebsmotorbediensignal unverändert aufrecht erhält, ohne dass es dazu einer fortwährenden Bedienerinteraktion bedarf.

Eine erfindungsgemäße Recheneinheit, z.B. ein Steuergerät einer mobilen Arbeitsmaschine oder eines Fahrantriebstrangs einer mobilen Arbeitsmaschine, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt einen Schaltplan eines erfindungsgemäßen Fahrantriebs gemäß einem Ausführungsbeispiel.
- Figur 2: zeigt ein Ablaufdiagramm eines Verfahrens gemäß einer Ausführungsform.
- Figur 3: zeigt ein Schema, das Ausgestaltungen der Bestimmung des Ansteuergrads für die Hydropumpe illustriert.
- Figur 4: zeigt ein Schema, das Ausgestaltungen der Bestimmung des Verstellwerts für den Hydromotor illustriert.

### Detaillierte Beschreibung der Zeichnung

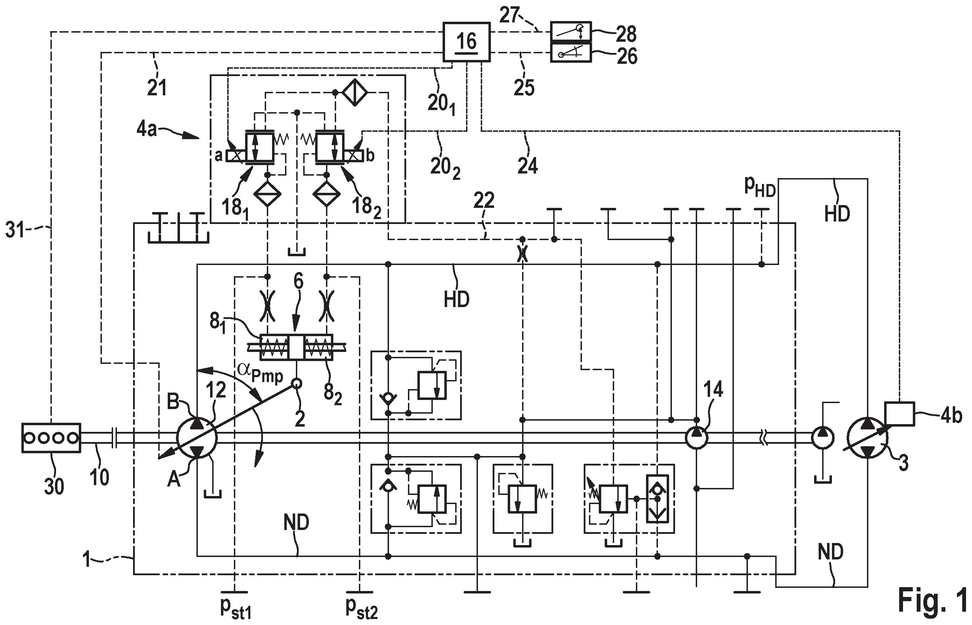

Figur 1 zeigt einen Schaltplan eines Ausführungsbeispiels eines erfindungsgemäßen Fahrantriebs, der ein Beispiel für einen hydrostatischen Antriebstrang ist. Es werden nur die für die Erfindung wesentlichen Komponenten beschrieben. Der Fahrantrieb hat eine Hydropumpe 1, die insbesondere eine Axialkolbenpumpe ist, an deren Gehäuse zwei Arbeitsanschlüsse A, B gebildet sind. Über die Arbeitsanschlüsse A, B und über Arbeitsleitungen eines geschlossenen Kreises ist ein Hydromotor 3 fluidisch mit der Hydropumpe 1 verbunden. An eine Abtreibwelle des Hydromotors 3 ist ein (nicht gezeigtes) Rad drehfest gekoppelt. Damit ist ein Fahrantrieb für eine (nicht näher gezeigte) mobile Arbeitsmaschine gebildet.

Allgemein formuliert sind die Hydropumpe 1 und der Hydromotor 3 beide hydraulische Maschinen bzw. Hydraulikmaschinen, d.h. sie können sowohl als hydraulische Pumpe (mechanische Energie wird in hydraulische Energie umgesetzt) oder als hydraulischer Motor (hydraulische Energie wird in mechanische Energie umgesetzt) wirken. Die Bezeichnungen Hydropumpe 1 und Hydromotor 2 sind zur Vereinfachung gewählt und beziehen sich auf die hauptsächliche Wirkung der jeweiligen hydraulischen Maschine, wobei situationsbedingt Abweichungen auftreten können, z.B. kann der Hydromotor 2 bei Bremsvorgängen der mobilen Arbeitsmaschine, in welcher der Fahrantrieb verwendet wird, als hydraulische Pumpe wirken. Die Hydropumpe 1 und/oder der Hydromotor 3 sind insbesondere Axialkolbenmaschinen in Schrägscheibenbauweise. Der Begriff "Fördervolumen" bzw. "Verdrängung" bezeichnet das je Umdrehung von der jeweiligen hydraulischen Maschine geförderte Volumen an Druckmittel (d.h. Hydraulikflüssigkeit, insbesondere Hydrauliköl). Bei Axialkolbenmaschinen in Schrägscheibenbauweise ist das Fördervolumen durch eine Verstelleinheit verstellbar und etwa durch einen Schwenkwinkel gegeben. Das Fördervolumen bzw. der Schwenkwinkel können als Prozentsatz zwischen 0 % und +100 % bzw. bei nulldurchstellbarer Axialkolbenmaschine zwischen -100 % und +100 % angegeben werden, wobei +100 % einem maximal möglichen Fördervolumen der Axialkolbenmaschine entspricht, 0 % einem Fördervolumen von null entspricht und -100 % einem minimal möglichen Fördervolumen der Axialkolbenmaschine entspricht.

Die Hydropumpe 1 ist mit einer Schrägscheibe 2 ausgeführt, deren Pumpenschwenkwinkel α_{Pmp} über eine Verstelleinheit 4a einstellbar ist. Dazu dient ein doppelt-wirkender Stellzylinder 6, der eine erste Stelldruckkammer 8₁ und eine dem entgegenwirkende zweite Stelldruckkammer 8₂ aufweist.

Ein erster Steuerdruck pₛₜ₁ wirkt in der ersten Stelldruckkammer 8₁ in Richtung einer Vergrößerung des Schwenkwinkels α_{Pmp} und damit in Richtung einer Vergrößerung des Pumpenfördervolumens V_{gPmp}. Dem entgegen wirkt ein zweiter Stelldruck pₛₜ₂ in der zweiten Stelldruckkammer 8₂ in Richtung einer Verkleinerung des Schwenkwinkels α_{Pmp} und damit in Richtung einer Verringerung des Pumpenfördervolumens V_{gPmp}. Dabei lässt sich eine Stelldruckdifferenz Δₚₛₜ = pₛₜ₁ - pₛₜ₂ definieren, die definitionsgemäß stets in Richtung einer Vergrößerung des Pumpenschwenkwinkels α_{Pmp} bzw. des Pumpenfördervolumens V_{gPmp} wirkt.

Über eine Antriebswelle 10 der Hydropumpe 1 wird deren Triebwerk 12 und darüberhinausgehend auch eine Speisepumpe 14 angetrieben. Die Antriebswelle 10 wird von einem Antriebsmotor 30, beispielsweise einem Verbrennungsmotor, insbesondere einem Dieselmotor, oder einer elektrischen Maschine, angetrieben, dessen Welle mit einer Drehzahl n_{Eng} rotiert. Mit gleicher oder, wenn ein Getriebe mit einer Übersetzung ungleich eins vorgesehen ist, mit proportional veränderter Pumpendrehzahl n_{Pmp} rotiert daher die Antriebswelle 10.

Die Pumpendrehzahl n_{Pmp} wirkt zusammen mit der Stelldruckdifferenz Δₚₛₜ in Richtung einer Vergrößerung des Pumpenschwenkwinkels α_{Pmp}. Genauer gesagt wirkt eine Zunahme der Pumpendrehzahl n_{Pmp} auf diese Weise.

Wenn die gezeigte Hydropumpe 1 über ihre Arbeitsanschlüsse A, B den Hydromotor 3 versorgt, sei bei Vorwärtsfahrt der mobilen Arbeitsmaschine Arbeitsanschluss B als der Hochdruckanschluss angenommen. Entsprechend ist die mit dem Arbeitsanschluss B verbundene Arbeitsleitung mit HD (Hochdruck) gekennzeichnet, während die andere Arbeitsleitung mit ND (Niederdruck) gekennzeichnet ist. Der Hochdruck p_{HD} wirkt in Richtung einer Verringerung des Pumpenschwenkwinkels α_{Pmp}. Beispielsweise sind an einem Gehäuse bzw. Körper der Hydropumpe 1 Sensoranschlüsse (mit pₛₜ₁, pₛₜ₂, p_{HD} gekennzeichnet) vorgesehen, an denen jeweils Drucksensoren verbunden werden können, welche Druckmesswerte insbesondere an die Steuereinheit 16 übermitteln (über nicht dargestellte elektrische Sensorleitungen). Selbstverständlich kann der Niederdruck p_{ND} auf ähnliche Weise ebenfalls erfasst werden. Alternativ oder zusätzlich könnten Druckmessstellen für den Hochdruck und/oder Niederdruck auch außerhalb der Hydropumpe 1 an Zuleitungen zum Hydromotor 3 oder am Hydromotor 3 selbst vorgesehen sein. Die genannten Wirkungen der Stelldruckdifferenz Δₚₛₜ, der Pumpendrehzahl n_{Pmp} und des Hochdruck p_{HD} können durch Messungen und/oder Simulationen bestimmt werden. Ihre oben genannten Wirkungen auf den Pumpenschwenkwinkels α_{Pmp} sind beispielsweise in einer elektronischen Steuereinheit 16 als Formeln und/oder als Kennfelder bzw. Kennlinien hinterlegt. Damit lassen sich Betriebspunkte der Hydropumpe 1 ansteuern, ohne dass dafür eine Rückkoppelung im Sinne eines Regelkreises notwendig ist.

Die beiden Stelldrücke pₛₜ₁, pₛₜ₂ werden über zwei Druckreduzierventile 18₁, 18₂ gesteuert. Diese haben jeweils einen elektrischen Magneten a, b, der über eine jeweilige elektrische Leitung 20₁, 20₂ mit der elektronischen Steuereinheit 16 verbunden sind. Die beiden Druckreduzierventile 18₁, 18₂ sind derart ausgelegt, dass der jeweilige Stelldruck pₛₜ₁, pₛₜ₂ proportional zur jeweiligen Stromstärke i_{Pmp,FWd}, i_{Pmp,Rvs} ist. Die beiden Druckreduzierventile 18₁, 18₂ werden eingangsseitig über eine Speisedruckleitung 22 von der Speisepumpe 14 versorgt. Ein Wert des Pumpenschwenkwinkels α_{Pmp} kann mit einem geeigneten Sensor gemessen und über eine elektrische Sensorleitung 21 an die Steuereinheit 16 übermittelt werden.

Als Sekundärmaschine ist der bereits genannte Hydromotor 3 an die beiden Arbeitsleitungen HD, ND des geschlossenen Kreises angeschlossen. Ein Motorschluckvolumen V_{gMot} ist über eine elektrische Verstelleinheit 4b verstellbar. Diese ist über eine elektrische Leitung 24 an die Steuereinheit 16 angeschlossen und wird auf die im Folgenden beschriebene erfindungsgemäße Weise gesteuert und geregelt.

Es können weiterhin elektrische Steuer- und/oder Sensorleitungen 31 vorgesehen sein, über welche die Steuereinheit Steuerbefehle an den Antriebsmotor 30 übermitteln kann und/oder Messwerte eines Drehzahlsensors des Antriebsmotors 30 empfangen kann. Ein Drehzahlsensor könnte stattdessen oder zusätzlich auch an der Hydropumpe 1 vorgesehen sein.

Über elektrische Leitungen 25, 27 sind Bedienelemente, z.B. ein Fahrpedal 26 und ein Handgas 28, zur Übermittlung des Fahrerwunsches an die Steuereinheit 16 angeschlossen. Die Bedienelemente bilden eine Benutzerschnittstelle bzw. zumindest einen Teil einer solchen.

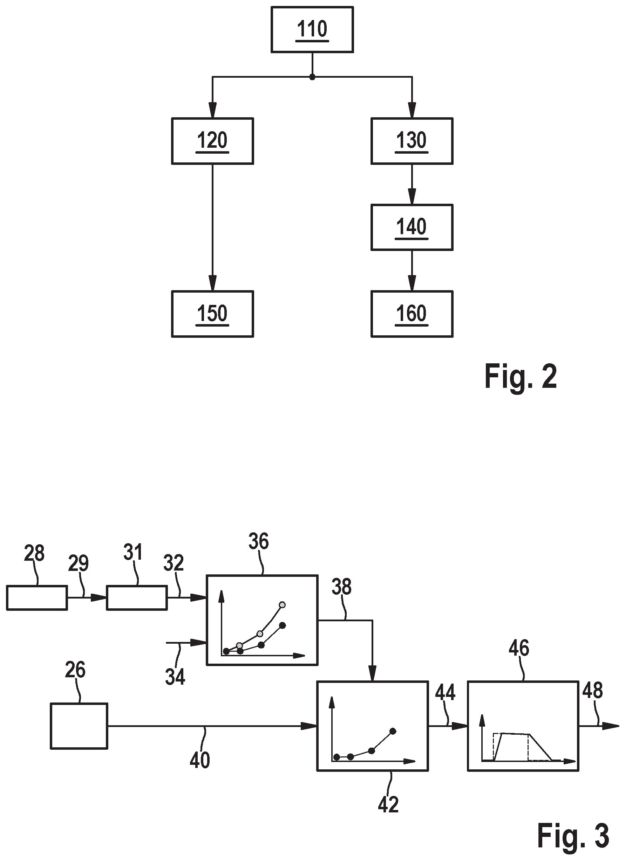

Figur 2 zeigt ein Ablaufdiagramm eines Verfahrens gemäß einer Ausführungsform der Erfindung. Das Verfahren betrifft den Betrieb bzw. die Steuerung eines hydrostatischen Fahrantriebstrangs einer mobilen Arbeitsmaschine, wie er etwa in Figur 1 dargestellt ist. Der Fahrantriebstrang weist eine verstellbare Hydropumpe und einen mit dieser hydraulisch verbundenen, verstellbaren Hydromotor auf, wobei die Hydropumpe durch einen Antriebsmotor, insbesondere einen Verbrennungsmotor, angetrieben wird. Eine Abtriebswelle des Hydromotors ist mit einer Antriebsachse des Fahrantriebs gekoppelt, über die wenigste ein Rad oder eine Kette der mobilen Arbeitsmaschine angetrieben wird. Das Verfahren kann insbesondere durch ein Steuergerät der Arbeitsmaschine bzw. des Fahrantriebstrangs implementiert werden (d.h. durch eine Recheneinheit, bezugnehmend auf Figur 1 z.B. die elektronische Steuereinheit 16).

In Schritt 110 wird ein durch ein erstes Bedienelement, z.B. ein Fahrpedal oder einem ähnlichen Bedienelement, das stetig auslenkbar ist, erzeugtes Fahrbediensignal erfasst.

In Schritt 120 wird unter Verwendung einer Pumpen-Steuer-Kennlinie aus dem Fahrbediensignal ein Ansteuergrad zumindest eines Druckregelventils einer Verstelleinheit der Hydropumpe bestimmt. Bezugnehmend auf Figur 1 ist der Ansteuergrad z.B. die Stelldruckdifferenz Δₚₛₜ = pₛₜ₁ - pₛₜ₂ oder ein entsprechender Wert, der aus den Stromstärken i_{Pmp,FWd}, i_{Pmp,Rvs}, mit denen die Druckreduzierventile angesteuert werden, erhalten wird.

**In** Schritt 130 wird unter Verwendung einer Solldruck-Kennlinie aus dem Fahrbediensignal ein Solldruck bestimmt. Weiter wird in Schritt 140 durch eine Druckregelung aus dem Solldruck und einem Istdruck des Hydromotors ein Verstellwert für eine Verstellgröße des Hydromotors bestimmt.

Die Verstellgröße ist insbesondere ein Fördervolumen bzw. ein Schwenkwinkel des Hydromotors. Der Solldruck und der Istdruck sind insbesondere ein Sollwert und ein Istwert für eine Druckdifferenz über den Hydromotor (d.h. eine Druckdifferenz zwischen Arbeitsanschlüssen des Hydromotors, zwischen denen durch diesen Druckmittel gefördert wird, oder damit verbundenen Hydraulikleitungen, z.B. den Hochdruck minus den Niederdruck in Figur 1) oder für den Druck an einem Arbeitsanschluss des Hydromotors oder einer damit verbunden Hydraulikleitung, z.B. den Hochdruck, wenn ein offener hydraulischer Kreis über einen Tank gebildet ist, dessen Druckniveau bekannt und/oder vernachlässigbar klein gegenüber dem Hochdruck ist). Es können ein oder mehrere geeignete Drucksensoren vorgesehen werden, um den Istdruck zu bestimmen.

**In** Schritt 150 wird das zumindest eine Druckregelventil der Verstelleinheit der Hydropumpe entsprechend dem Ansteuergrad angesteuert, d.h. insbesondere so angesteuert, dass die die Verstelleinheit der Hydropumpe den Verstellwert annimmt. Ebenso wird in Schritt 160 eine Verstelleinheit des Hydromotors entsprechend dem Verstellwert angesteuert, d.h. insbesondere so angesteuert, dass die Verstellgröße den Verstellwert annimmt.

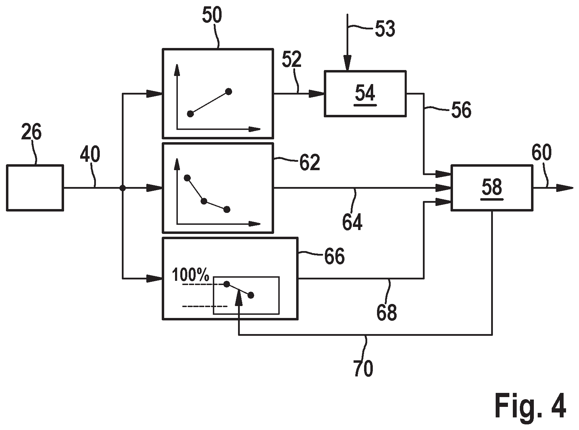

Die Schritte 110 bis 150 werden fortlaufend bzw. wiederholt durchgeführt. Ausgestaltungen der vorstehend genannten Schritte werden nachfolgend mit Bezug auf die Figuren 3 und 4 beschrieben.

Da der Volumenstrom durch eine hydraulische Maschine gleich dem Produkt aus Drehzahl und Fördervolumen ist (abgesehen von Leckage), resultiert die Drehzahl des Hydromotors (und damit die Fahrgeschwindigkeit der Arbeitsmaschine) aus dem Volumenstrom durch den Hydromotor und dem Verstellwert, der insbesondere dem Fördervolumen des Hydromotors entspricht, wobei der Volumenstrom durch die Drehzahl der Hydropumpe, welche als im Wesentlichen konstant oder nur langsam verstellbar angenommen wird, und dem Fördervolumen der Hydropumpe, das über den Ansteuergrad gesteuert wird, gegeben ist. Kommt es zu einer Laständerung, d.h. einer Änderung des vom Hydromotor aufzubringenden Drehmoments, wird durch die Druckregelung die Verstellgröße geändert, so dass der Solldruck weiterhin erreicht wird (da das Drehmoment bei Vernachlässigung von Reibung proportional zum Produkt aus Druck und Fördervolumen ist), was wiederum zu einer Änderung der Drehzahl des Hydromotors bzw. der Fahrgeschwindigkeit führt. Um dies Auszugleichen kann ein Bediener der Arbeitsmaschine das erste Bedienelement (z.B. Fahrpedal) betätigen, so dass der Bediener die Last sozusagen "fühlt" (auch bei konstanter Drehzahl des Antriebsdrehzahl).

Figur 3 zeigt ein Schema, das Ausgestaltungen der Bestimmung des Ansteuergrads für die Hydropumpe illustriert. Es wird von einem ersten Bedienelement 26 und einem zweiten Bedienelement 28 bzw. von diesen erzeugten Bediensignalen ausgegangen. Das erste Bedienelement 26 ist insbesondere ein Bedienelement, welches einer fortwährenden Bedienerinteraktion bedarf, um den Wert bzw. die Höhe des Bediensignals aufrechtzuerhalten, z.B. ein Fahrpedal oder ein Joystick, welche, wenn sie nicht fortwährend durch einen Fuß bzw. eine Hand des Bedieners betätigt werden, in eine Nullstellung zurückkehren. Das zweite Bedienelement 28 ist insbesondere ein Bedienelement, welches nach einer Betätigung, mit der ein Wert bzw. eine Höhe des Bediensignals eingestellt wird, keiner fortwährenden Bedienerinteraktion bedarf, um den Wert bzw. die Höhe des Bediensignals aufrechtzuerhalten, z.B. ein Handgashebel, der seine Stellung nach Wegnahme einer Hand beibehält.

Das Bediensignal des zweiten Bedienelements 28 wird als Antriebsmotorbediensignal 29 bezeichnet und dient zu Steuerung bzw. Regelung des Antriebsmotors, wobei insbesondere ein Wert bzw. eine Höhe des Antriebsmotorbediensignals 29 einer Solldrehzahl des Antriebsmotors und/oder der Hydropumpe entspricht und der Antriebsmotor entsprechend durch eine Drehzahlregelung 31 geregelt wird. Das zweite Bedienelement 28 hält insbesondere, wie oben beschrieben, das durch den Bediener eingestellte Antriebsmotorbediensignal 29 unverändert aufrecht, ohne dass dazu eine weitere Bedienerinteraktion notwendig ist, so dass die Drehzahl 32 des Antriebsmotors fest ist (abgesehen von Regelungsabweichungen), zumindest bis der Bediener das zweite Bedienelement 28 verstellt.

Die Drehzahl 32 des Antriebsmotors und das Fördervolumen 34 bzw. der Schwenkwinkel der Hydropumpe (entsprechend dem Pumpenschwenkwinkel α_{Pmp} **in** Figur 1) werden z.B. durch geeignete Sensoren erfasst. Aus dem Fördervolumen 34 der Hydropumpe und der Drehzahl 32 des Antriebsmotors (bzw. der Hydropumpe) kann, insbesondere mittels eines Kennfelds 36, ein Maximum 38 für den Ansteuergrad bestimmt werden. Beispielsweise ist ein Graph eingezeichnet, in dem mittels zwei Linien das Maximum für den Ansteuergrad gegen die Drehzahl 32 des Antriebsmotors aufgetragen ist, so dass einer gegebenen Drehzahl ein entsprechendes Maximum zugeordnet werden kann. Die beiden Linien betreffen unterschiedliche Fördervolumina 34 (Pumpenschwenkwinkel), wobei etwa die obere Linie ein betragsmäßig relativ kleines Fördervolumen, etwa unter einer unteren Schranke, betrifft und die untere Linie ein betragsmäßig relativ großes Fördervolumen, etwa über einer oberen Schranke, betrifft. Bei einem Fördervolumen 34, das zwischen der unteren und der oberen Schranke liegt kann etwa zwischen den beiden Linien interpoliert werden. Die obere Linie steigt hier stärker an, so dass bei hoher Last insbesondere die Rückwirkung des Hochdrucks auf das Fördervolumen bzw. den Schwenkwinkel berücksichtigt wird (vgl. die Beschreibung der Figur 1).

Das Bediensignal des ersten Bedienelements 26 wird als Fahrbediensignal 40 bezeichnet und dient zur Bestimmung des Ansteuergrads. Dazu wird eine Pumpen-Steuerungs-Kennlinie 42 verwendet, die den Wert bzw. die Höhe des Fahrbediensignals 40 auf einen Wert für den Ansteuergrad abbildet. Dies ist durch eine Linie in einem entsprechenden Graphen illustriert. Diese Kennlinie ist dergestalt, dass der Ansteuergrad 44 mit zunehmendem Wert bzw. zunehmender Höhe des Fahrbediensignals 40 zunimmt, wobei die Zunahme insbesondere (wie illustriert) progressiv sein kann, d.h. die Steigung der Zunahme nimmt mit zunehmendem Wert bzw. zunehmender Höhe des Fahrbediensignals 40 zu. Durch die Form der Pumpen-Steuerungs-Kennlinie 42 kann die Charakteristik und die Feinfühligkeit des Fahrantriebs eingestellt werden. Wenn, wie dargestellt, ein Maximum 38 für den Ansteuergrad bestimmt wird, wird der Ansteuergrad durch dieses Maximum 38 beschränkt, d.h. wenn der Wert für den Ansteuergrad, der sich aus der Pumpen-Steuerungs-Kennlinie 42 ergibt über dem Maximum 38 liegt, wird stattdessen das Maximum als Wert für den Ansteuergrad 44 verwendet.

Es kann optional vorgesehen sein, dass eine Dynamiklimitierung 46 des Ansteuergrads 44 durchgeführt wird, durch welche eine Änderungsrate des Ansteuergrads 44 limitiert bzw. begrenzt wird (insbesondere nach oben, d.h. Änderungsrate größer null, und unten, d.h. Änderungsrate kleiner null). Beispielweise kann ein Tiefpassfilter verwendet werden oder es können explizit Änderungsratengrenzwerte vorgegeben werden, welche die Änderungsrate nicht überschreiten bzw. unterschreiten darf. Durch die Dynamiklimitierung 46 wird ein dynamiklimitierter Ansteuergrad 48 erhalten. Das Ansprechverhalten für Beschleunigung und Verzögerung kann durch die Dynamiklimitierung parametriert werden.

Die Verstelleinheit der Hydropumpe wird mit dem (dynamik-unlimitierten) Ansteuergrad 44 oder gegebenenfalls dem dynamik-limitierten Ansteuergrad 48 angesteuert.

Figur 4 zeigt ein Schema, das Ausgestaltungen der Bestimmung des Verstellwerts für den Hydromotor illustriert. Es wird von dem ersten Bedienelement 26, z.B. ein Fahrpedal, bzw. dem von diesem erzeugten Fahrbediensignal ausgegangen.

Aus dem Fahrbediensignal 40 wird durch eine Solldruck-Kennlinie 50 ein Solldruck 52 bzw. ein Solldruckwert bestimmt. Die Solldruck-Kennlinie 50 ist insbesondere dergestalt, dass der Solldruck 52 bzw. der Solldruckwert ausgehend vom einem bestimmten Mindestdruck (z.B. einem Leerlaufdruck) mit zunehmendem Wert bzw. zunehmender Höhe des Fahrbediensignal zunimmt, beispielsweise ist eine Zunahme mit konstanter Steigung illustriert, wobei allerdings auch eine andere Form der Zunahme, mit variierender Steigung, möglich ist.

Es ist eine Druckregelung 54 vorgesehen, die aus einem Istdruck 53 bzw. Istdruckwert, der z.B. mittels eines oder mehrerer Drucksensoren bestimmt wird, und dem Solldruck des Verstellwert 56 für die Verstellgröße des Hydromotors bestimmt. Der Istdruck 53 (und entsprechend der Solldruck) ist z.B. der Druck des Druckmittels an einem Arbeitsanschluss des Hydromotors (oder einer damit verbunden Hydraulikleitung o.Ä.) oder ein Druckunterschied über den Hydromotor, d.h. ein Unterschied zwischen Drücken an Arbeitsanschlüssen, zwischen denen durch den Hydromotor Druckmittel gefördert wird. Durch die Druckregelung 54 wird eine Regeldifferenz (Istdruck minus Solldruck) auf null geregelt. Die Druckregelung 54 kann beispielsweise ein Proportionalglied und/oder ein Integralglied und/oder ein Differentialglied einschließen. Die Verstellgröße ist beispielsweise das Fördervolumen (auch als Verdrängung bezeichnet) bzw. der Schwenkwinkel des Hydromotors.

Durch eine Steuerung 58 des Hydromotors bzw. einer Steuerung der Verstelleinheit des Hydromotors wird aus dem Verstellwert 56 ein Steuersignal 60 für die Verstelleinheit des Hydromotors bestimmt und die Verstelleinheit des Hydromotors damit angesteuert.

Optional können Begrenzungen für den Verstellwert implementiert werden. Etwa kann mittels einer Minimum-Kennlinie 62 aus dem Fahrbediensignal 40 ein Minimalwert 64 für die Verstellgröße des Hydromotors bestimmt werden. Die Minimum-Kennlinie 62 ist insbesondere dergestalt, dass der Minimalwert mit zunehmender Höhe bzw. zunehmendem Wert des Fahrbediensignals 40 abnimmt. Dadurch kann ein gewisses minimal vom Hydromotor aufbringbares Drehmoment gewährleistet werden, etwa, um ungewolltes Beschleunigen bergab zu vermeiden.

Weiter kann mittels einer Maximum-Kennlinie 66 aus dem Fahrbediensignal 40 ein Maximalwert 68 für die Verstellgröße des Hydromotors bestimmt werden. Die Maximum-Kennlinie 66 ist insbesondere dergestalt, dass der Maximalwert mit zunehmender Höhe bzw. zunehmendem Wert des Fahrbediensignals 40 abnimmt, wobei etwa bei einem Wert des Fahrbediensignals von null (oder unter einem vorbestimmten Wert des Fahrbediensignals) der Maximalwert 100 % (oder zumindest nahe 100%) ist und davon ausgehend mit dem Wert bzw. der Höhe des Fahrbediensignals abnimmt, wobei weitergehend ein vorbestimmter reduzierter Wert für die Verstellgröße nicht unterschritten wird (z.B. im Bereich von 40 % bis 80 % des maximal möglichen Werts der Verstellgröße). Dadurch kann gewährleistet werden, dass das vom Hydromotor aufzubringende Drehmoment nicht zu groß wird. Bei der Bestimmung des Maximalwerts 68 aus der Maximum-Kennlinie 66 kann ein Steuermodus 70 der Steuerung 58 des Hydromotors (falls dieser mehrere Steuermoden implementieren kann) berücksichtigt werden, z.B. könnten verschiedene Kennlinien für verschiedene Steuermoden vorgesehen sein.

Der Minimalwert 64 und/oder der Maximalwert 68 werden durch die Steuerung 58 des Hydromotors berücksichtigt, so dass, wenn der durch die Druckregelung 54 bestimmte Verstellwert 56 unter dem Minimalwert 64 liegt oder über dem Maximalwert 68 liegt, stattdessen der Minimalwert 64 bzw. der Maximalwert 68 verwendet wird. Alternativ kann diese Begrenzung auch bereits in der Druckregelung realisiert sein, d.h. die Druckregelung bestimmt den Verstellwert 56, so dass dieser nicht unter dem Minimalwert 64 bzw. nicht über dem Maximalwert 68 liegt. Wenn die Druckregelung ein Integralglied einschließt, kann, wenn eine dieser Begrenzungen greift, die in der Steuerung 58 nicht berücksichtigte Differenz (unbegrenzter Verstellwert minus begrenzter Verstellwert) in einer in der Druckregelung vorgesehenen Anti-Windup-Funktion verwendet werden. Wenn beide Begrenzungen implementiert werden, sollten klarerweise die Minimum-Kennlinie 66 und die Maximum-Kennlinie 66 aufeinander abgestimmt sein, d.h. die Minimum-Kennlinie 66 sollte für jedes Fahrbediensignal über der Maximum-Kennlinie 66 liegen.

## Patentansprüche

1. Verfahren zum Betreiben eines hydrostatischen Fahrantriebstrangs einer mobilen Arbeitsmaschine, wobei der Fahrantriebstrang eine verstellbare Hydropumpe (1) und einen mit dieser hydraulisch verbundenen, verstellbaren Hydromotor (3) aufweist, wobei die Hydropumpe (1) durch einen Antriebsmotor (30), insbesondere einen Verbrennungsmotor, angetrieben wird,
wobei ein durch ein erstes Bedienelement (26) erzeugtes Fahrbediensignal (40) erfasst wird (110);
wobei unter Verwendung einer Pumpen-Steuerungs-Kennlinie (42) aus dem Fahrbediensignal (40) ein Ansteuergrad (48) zumindest eines Druckregelventils (18₁, 18₂) einer Verstelleinheit (4a) der Hydropumpe (1) bestimmt wird (120);
wobei unter Verwendung einer Solldruck-Kennlinie (50) aus dem Fahrbediensignal (40) ein Solldruck (52) bestimmt wird (130);
wobei durch eine Druckregelung (54) aus dem Solldruck (52) und einem Istdruck (53) des Hydromotor (3) ein Verstellwert (56) für eine Verstellgröße des Hydromotors bestimmt wird (140);
wobei das zumindest eine Druckregelventil (18₁, 18₂) der Verstelleinheit (4a) der Hydropumpe (1) entsprechend dem Ansteuergrad (44) angesteuert wird (150) und wobei eine Verstelleinheit (4b) des Hydromotors (3) entsprechend dem Verstellwert (56) angesteuert wird (160).

2. Verfahren nach Anspruch 1, wobei aus einem Fördervolumen (34) bzw. einem Schwenkwinkel der Hydropumpe (1) und einer Drehzahl (32) des Antriebsmotors (30) und/oder der Hydropumpe ein Maximum (38) für den Ansteuergrad bestimmt wird; wobei der Ansteuergrad (44) des zumindest einen Druckregelventils bestimmt wird, so dass das Maximum (38) nicht überschritten wird.

3. Verfahren nach einem der Ansprüche 1 oder 2, wobei eine Dynamiklimitierung (46) des Ansteuergrads (44) erfolgt, durch welche eine Änderungsrate des Ansteuergrads betragsmäßig begrenzt und/oder limitiert wird; wobei der durch die Dynamiklimitierung (46) begrenzte bzw. limitierte Ansteuergrad (48) in der Ansteuerung (160) des zumindest einen Druckregelventils verwendet wird.

4. Verfahren nach Anspruch 3,
wobei die Dynamiklimitierung (46) des Ansteuergrads (44) so erfolgt, dass die Änderungsrate gleich oder größer als ein unterer Änderungsratengrenzwert und/oder gleich oder kleiner als ein oberer Änderungsratengrenzwert ist; und/oder wobei die Dynamiklimitierung ein Tiefpassfilter einschließt.

5. Verfahren nach einem der vorstehenden Ansprüche, wobei die Verstellgröße des Hydromotors (3) eine Verdrängung bzw. ein Schwenkwinkel des Hydromotors ist.

6. Verfahren nach einem der vorstehenden Ansprüche, wobei unter Verwendung einer Minimum-Kennlinie (62) aus dem Fahrbediensignal (40) ein Minimalwert (64) für die Verstellgröße des Hydromotors (3) bestimmt wird; und wobei in der Druckregelung (54) der Verstellwert so bestimmt wird, dass der Minimalwert nicht unterschritten wird, und/oder wobei, wenn der durch die Druckregelung (54) bestimmte Verstellwert (56) kleiner als der Minimalwert (64) ist, die Verstelleinrichtung (4b) des Hydromotors mit dem Minimalwert (64) angesteuert wird.

7. Verfahren nach Anspruch 6, wobei in der Minimum-Kennlinie (62) der Minimalwert (64) ausgehend von einem Anfangswert bei einer Höhe des Fahrbediensignals (40) von kleiner als 10 %, insbesondere von gleich null, einer maximalen Höhe des Fahrbediensignals, mit zunehmender Höhe des Fahrbediensignals (40) abnimmt; wobei der Anfangswert im Bereich zwischen 50 % und 100 % einem maximal möglichen Wert der Verstellgröße liegt.

8. Verfahren nach einem der vorstehenden Ansprüche, wobei unter Verwendung einer Maximum-Kennlinie (66) aus dem Fahrbediensignal (40) ein Maximalwert (68) für die Verstellgröße des Hydromotors (3) bestimmt wird; und wobei in der Druckregelung (54) der Verstellwert (56) so bestimmt wird, dass der Maximalwert nicht überschritten wird, und/oder wobei, wenn der durch die Druckregelung (54) bestimmte Verstellwert (56) größer als der Maximalwert (68) ist, die Verstelleinrichtung (4b) des Hydromotors mit dem Maximalwert (68) angesteuert wird.

9. Verfahren nach Anspruch 8, wobei in der Maximum-Kennlinie (66) der Maximalwert (68) ausgehend von einem Wert im Bereich von 95 % bis 100 % eines maximal möglichen Werts der Verstellgröße mit zunehmender Höhe des Fahrbediensignals (40) abnimmt; wobei insbesondere der Maximalwert bei einer maximalen Höhe des Fahrbediensignals (40) im Bereich von 40 % bis 80 % des maximal möglichen Werts der Verstellgröße liegt.

10. Verfahren nach einem der vorstehenden Ansprüche, wobei ein durch ein zweites Bedienelement (28) erzeugtes Antriebsmotorbediensignal (29) erfasst wird; und wobei eine Drehzahlregelung (31) des Antriebsmotors und/oder der Hydropumpe entsprechend dem Antriebsmotorbediensignal (29) erfolgt, wobei eine Solldrehzahl der Drehzahlregelung (31) aus einem Wert bzw. einer Höhe des Antriebsmotorbediensignals (29) bestimmt wird.

11. Recheneinheit umfassend einen Prozessor, die so konfiguriert ist, dass sie das Verfahren nach einem der vorstehenden Ansprüche ausführt.

12. Computerprogramm umfassend Befehle, die bei der Ausführung des Programms durch einen Computer diesen veranlassen, das Verfahren nach Anspruch 1 bis 10 auszuführen.

13. Computerlesbarer Datenträger, auf dem das Computerprogramm nach Anspruch 12 gespeichert ist.
